# EUROPEAN PATENT APPLICATION

(11) **EP 4 524 742 A1**
(43) Date of publication of application: **19.03.2025**
(21) Application number: 24191666.7
(22) Date of filing: 30.07.2024
(51) Int. Cl.: G06F 9/50, G06F 15/78

(54) **I/O ACCELERATION IN A MULTI-NODE ARCHITECTURE**

(30) Priority: 15.09.2023 US 202363583202 P; 27.12.2023 US 202318397590
(71) Applicant: Intel Corporation, Santa Clara, CA 95054 (US)
(72) Inventor: VASUDEVAN, Anil, Santa Clara, 95054 (US); SAMUDRALA, Sridhar, Santa Clara, 95054 (US); GOHAD, Tushar S., Santa Clara, 95054 (US); KLEPPAN, Nash A., Santa Clara, 95054 (US); PETERS, Stefan T., Santa Clara, 95054 (US)
(74) Representative: Rummler, Felix

(57) **Abstract**

A set of threads of an application are identified to be executed on a platform, where the platform comprises a multi-node architecture. A set of queues of an I/O device of the platform are reserved and associated with one of a plurality of nodes in the multi-node architecture. Data is received at the I/O device, where the I/O device is included in a particular one of the plurality of nodes. Response data is generated through execution of a thread in the set of threads using a processing core and memory of the particular node, and the response data is caused to be sent on the I/O device based on inclusion of the I/O device in the particular node.

## Description

### RELATED APPLICATIONS

This application claims benefit to U.S. Provisional Patent Application No. 63/583,202, filed September 15, 2023, which is hereby incorporated by reference in its entirety.

### FIELD

The present disclosure relates in general to the field of distributed computing systems, and more specifically, to network communications involving a multi-node computing architecture.

### BACKGROUND

A datacenter may include one or more platforms each comprising at least one processor and associated memory modules. Each platform of the datacenter may facilitate the performance of any suitable number of processes associated with various applications running on the platform. These processes may be performed by the processors and other associated logic of the platforms. Each platform may additionally include I/O controllers, such as network adapter devices, which may be used to send and receive data on a network for use by the various applications.

### BRIEF DESCRIPTION OF THE DRAWINGS

FIG. 1 illustrates a block diagram of components of a datacenter in accordance with certain embodiments.
FIG. 2 is a simplified block diagram of an example platform within a network.
FIG. 3 is a simplified block diagram illustrating an example processor device.
FIG. 4 is a simplified block diagram illustrating an example processor device employing multiple I/O device bonds.
FIG. 5 is a simplified block diagram illustrating an example processor device employing a single I/O device bond.
FIG. 6 is a simplified block diagram illustrating a graph of comparative performance within a platform.
FIG. 7 is a flow diagram illustrating example techniques for affinitizing I/O traffic within a platform.
FIG. 8 illustrates a block diagram of an example processor device in accordance with certain embodiments.

Like reference numbers and designations in the various drawings indicate like elements.

### DETAILED DESCRIPTION

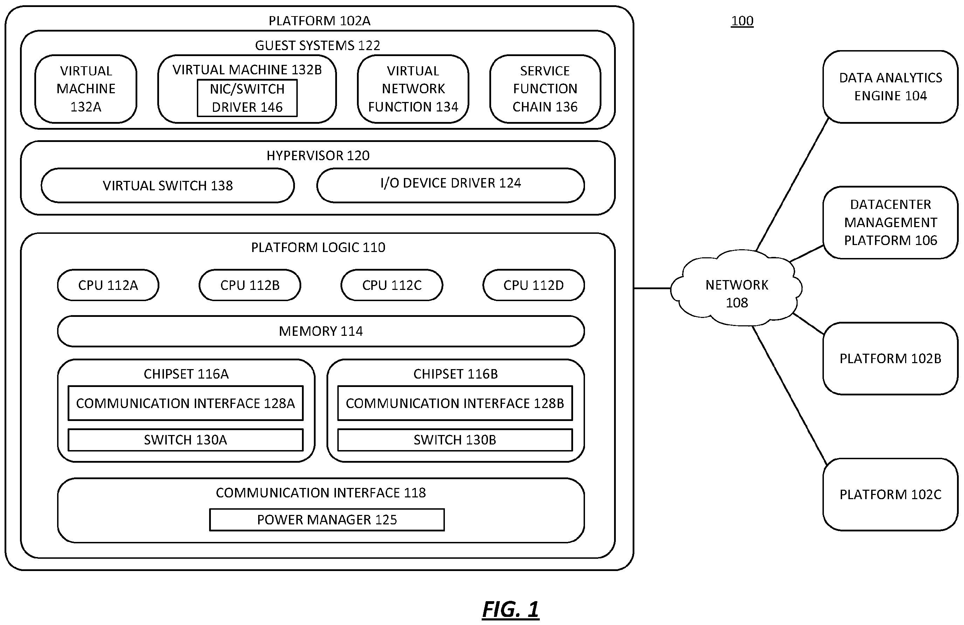

FIG. 1 illustrates a block diagram of components of a datacenter 100 in accordance with certain embodiments. In the embodiment depicted, datacenter 100 includes a plurality of platforms 102, data analytics engine 104, and datacenter management platform 106 coupled together through network 108. A platform 102 may include platform logic 110 with one or more central processing units (CPUs) 112, memories 114 (which may include any number of different modules), chipsets 116, communication interfaces 118, and any other suitable hardware and/or software to execute a hypervisor 120 or other operating system capable of executing processes associated with applications running on platform 102. In some embodiments, a platform 102 may function as a host platform for one or more guest systems 122 that invoke these applications. The platform may be logically or physically subdivided into clusters and these clusters may be enhanced through specialized networking accelerators and the use of Compute Express Link (CXL) memory semantics to make such cluster more efficient, among other example enhancements.

Each platform 102 may include platform logic 110. Platform logic 110 comprises, among other logic enabling the functionality of platform 102, one or more CPUs 112, memory 114, one or more chipsets 116, and communication interface 118. Although three platforms are illustrated, datacenter 100 may include any suitable number of platforms. In various embodiments, a platform 102 may reside on a circuit board that is installed in a chassis, rack, compossible servers, disaggregated servers, or other suitable structures that comprises multiple platforms coupled together through network 108 (which may comprise, e.g., a rack or backplane switch).

CPUs 112 may each comprise any suitable number of processor cores. The cores may be coupled to each other, to memory 114, to at least one chipset 116, and/or to communication interface 118, through one or more controllers residing on CPU 112 and/or chipset 116. In particular embodiments, a CPU 112 is embodied within a socket that is permanently or removably coupled to platform 102. Although four CPUs are shown, a platform 102 may include any suitable number of CPUs. In some implementations, application to be executed using the CPU (or other processors) may include physical layer management applications, which may enable customized software-based configuration of the physical layer of one or more interconnect used to couple the CPU (or related processor devices) to one or more other devices in a data center system.

Memory 114 may comprise any form of volatile or non-volatile memory including, without limitation, magnetic media (e.g., one or more tape drives), optical media, random access memory (RAM), read-only memory (ROM), flash memory, removable media, or any other suitable local or remote memory component or components. Memory 114 may be used for short, medium, and/or long-term storage by platform 102. Memory 114 may store any suitable data or information utilized by platform logic 110, including software embedded in a computer readable medium, and/or encoded logic incorporated in hardware or otherwise stored (e.g., firmware). Memory 114 may store data that is used by cores of CPUs 112. In some embodiments, memory 114 may also comprise storage for instructions that may be executed by the cores of CPUs 112 or other processing elements (e.g., logic resident on chipsets 116) to provide functionality associated with components of platform logic 110. Additionally or alternatively, chipsets 116 may each comprise memory that may have any of the characteristics described herein with respect to memory 114. Memory 114 may also store the results and/or intermediate results of the various calculations and determinations performed by CPUs 112 or processing elements on chipsets 116. In various embodiments, memory 114 may comprise one or more modules of system memory coupled to the CPUs through memory controllers (which may be external to or integrated with CPUs 112). In various embodiments, one or more particular modules of memory 114 may be dedicated to a particular CPU 112 or other processing device or may be shared across multiple CPUs 112 or other processing devices.

A platform 102 may also include one or more chipsets 116 comprising any suitable logic to support the operation of the CPUs 112. In various embodiments, chipset 116 may reside on the same package as a CPU 112 or on one or more different packages. Each chipset may support any suitable number of CPUs 112. A chipset 116 may also include one or more controllers to couple other components of platform logic 110 (e.g., communication interface 118 or memory 114) to one or more CPUs. Additionally or alternatively, the CPUs 112 may include integrated controllers. For example, communication interface 118 could be coupled directly to CPUs 112 via integrated I/O controllers resident on each CPU.

Chipsets 116 may each include one or more communication interfaces 128. Communication interface 128 may be used for the communication of signaling and/or data between chipset 116 and one or more I/O devices, one or more networks 108, and/or one or more devices coupled to network 108 (e.g., datacenter management platform 106 or data analytics engine 104). For example, communication interface 128 may be used to send and receive network traffic such as data packets. In a particular embodiment, communication interface 128 may be implemented through one or more I/O controllers, such as one or more physical network interface controllers (NICs), also known as network interface cards or network adapters. An I/O controller may include electronic circuitry to communicate using any suitable physical layer and data link layer standard such as Ethernet (e.g., as defined by an IEEE 802.3 standard), Fibre Channel, InfiniBand, Wi-Fi, or other suitable standard. An I/O controller may include one or more physical ports that may couple to a cable (e.g., an Ethernet cable). An I/O controller may enable communication between any suitable element of chipset 116 (e.g., switch 130) and another device coupled to network 108. In some embodiments, network 108 may comprise a switch with bridging and/or routing functions that is external to the platform 102 and operable to couple various I/O controllers (e.g., NICs) distributed throughout the datacenter 100 (e.g., on different platforms) to each other. In various embodiments an I/O controller may be integrated with the chipset (i.e., may be on the same integrated circuit or circuit board as the rest of the chipset logic) or may be on a different integrated circuit or circuit board that is electromechanically coupled to the chipset. In some embodiments, communication interface 128 may also allow I/O devices integrated with or external to the platform (e.g., disk drives, other NICs, etc.) to communicate with the CPU cores.

Switch 130 may couple to various ports (e.g., provided by NICs) of communication interface 128 and may switch data between these ports and various components of chipset 116 according to one or more link or interconnect protocols, such as Peripheral Component Interconnect Express (PCIe), Compute Express Link (CXL), HyperTransport, GenZ, OpenCAPI, and others, which may each alternatively or collectively apply the general principles and/or specific features discussed herein. Switch 130 may be a physical or virtual (i.e., software) switch.

Platform logic 110 may include an additional communication interface 118. Similar to communication interface 128, communication interface 118 may be used for the communication of signaling and/or data between platform logic 110 and one or more networks 108 and one or more devices coupled to the network 108. For example, communication interface 118 may be used to send and receive network traffic such as data packets. In a particular embodiment, communication interface 118 comprises one or more physical I/O controllers (e.g., NICs). These NICs may enable communication between any suitable element of platform logic 110 (e.g., CPUs 112) and another device coupled to network 108 (e.g., elements of other platforms or remote nodes coupled to network 108 through one or more networks). In particular embodiments, communication interface 118 may allow devices external to the platform (e.g., disk drives, other NICs, etc.) to communicate with the CPU cores. In various embodiments, NICs of communication interface 118 may be coupled to the CPUs through I/O controllers (which may be external to or integrated with CPUs 112). Further, as discussed herein, I/O controllers may include a power manager 125 to implement power consumption management functionality at the I/O controller (e.g., by automatically implementing power savings at one or more interfaces of the communication interface 118 (e.g., a PCIe interface coupling a NIC to another element of the system), among other example features.

Platform logic 110 may receive and perform any suitable types of processing requests. A processing request may include any request to utilize one or more resources of platform logic 110, such as one or more cores or associated logic. For example, a processing request may comprise a processor core interrupt; a request to instantiate a software component, such as an I/O device driver 124 or virtual machine 132; a request to process a network packet received from a virtual machine 132 or device external to platform 102 (such as a network node coupled to network 108); a request to execute a workload (e.g., process or thread) associated with a virtual machine 132, application running on platform 102, hypervisor 120 or other operating system running on platform 102; or other suitable request.

In various embodiments, processing requests may be associated with guest systems 122. A guest system may comprise a single virtual machine (e.g., virtual machine 132a or 132b) or multiple virtual machines operating together (e.g., a virtual network function (VNF) 134 or a service function chain (SFC) 136). As depicted, various embodiments may include a variety of types of guest systems 122 present on the same platform 102.

A virtual machine 132 may emulate a computer system with its own dedicated hardware. A virtual machine 132 may run a guest operating system on top of the hypervisor 120. The components of platform logic 110 (e.g., CPUs 112, memory 114, chipset 116, and communication interface 118) may be virtualized such that it appears to the guest operating system that the virtual machine 132 has its own dedicated components.

A virtual machine 132 may include a virtualized NIC (vNIC), which is used by the virtual machine as its network interface. A vNIC may be assigned a media access control (MAC) address, thus allowing multiple virtual machines 132 to be individually addressable in a network.

In some embodiments, a virtual machine 132b may be paravirtualized. For example, the virtual machine 132b may include augmented drivers (e.g., drivers that provide higher performance or have higher bandwidth interfaces to underlying resources or capabilities provided by the hypervisor 120). For example, an augmented driver may have a faster interface to underlying virtual switch 138 for higher network performance as compared to default drivers.

VNF 134 may comprise a software implementation of a functional building block with defined interfaces and behavior that can be deployed in a virtualized infrastructure. In particular embodiments, a VNF 134 may include one or more virtual machines 132 that collectively provide specific functionalities (e.g., wide area network (WAN) optimization, virtual private network (VPN) termination, firewall operations, load-balancing operations, security functions, etc.). A VNF 134 running on platform logic 110 may provide the same functionality as traditional network components implemented through dedicated hardware. For example, a VNF 134 may include components to perform any suitable NFV workloads, such as virtualized Evolved Packet Core (vEPC) components, Mobility Management Entities, 3rd Generation Partnership Project (3GPP) control and data plane components, etc.

SFC 136 is group of VNFs 134 organized as a chain to perform a series of operations, such as network packet processing operations. Service function chaining may provide the ability to define an ordered list of network services (e.g., firewalls, load balancers) that are stitched together in the network to create a service chain.

A hypervisor 120 (also known as a virtual machine monitor) may comprise logic to create and run guest systems 122. The hypervisor 120 may present guest operating systems run by virtual machines with a virtual operating platform (i.e., it appears to the virtual machines that they are running on separate physical nodes when they are actually consolidated onto a single hardware platform) and manage the execution of the guest operating systems by platform logic 110. Services of hypervisor 120 may be provided by virtualizing in software or through hardware assisted resources that require minimal software intervention, or both. Multiple instances of a variety of guest operating systems may be managed by the hypervisor 120. Each platform 102 may have a separate instantiation of a hypervisor 120.

Hypervisor 120 may be a native or bare-metal hypervisor that runs directly on platform logic 110 to control the platform logic and manage the guest operating systems. Alternatively, hypervisor 120 may be a hosted hypervisor that runs on a host operating system and abstracts the guest operating systems from the host operating system. Various embodiments may include one or more non-virtualized platforms 102, in which case any suitable characteristics or functions of hypervisor 120 described herein may apply to an operating system of the non-virtualized platform.

Hypervisor 120 may include a virtual switch 138 that may provide virtual switching and/or routing functions to virtual machines of guest systems 122. The virtual switch 138 may comprise a logical switching fabric that couples the vNICs of the virtual machines 132 to each other, thus creating a virtual network through which virtual machines may communicate with each other. Virtual switch 138 may also be coupled to one or more networks (e.g., network 108) via physical NICs of communication interface 118 so as to allow communication between virtual machines 132 and one or more network nodes external to platform 102 (e.g., a virtual machine running on a different platform 102 or a node that is coupled to platform 102 through the Internet or other network). Virtual switch 138 may comprise a software element that is executed using components of platform logic 110. In various embodiments, hypervisor 120 may be in communication with any suitable entity (e.g., a SDN controller) which may cause hypervisor 120 to reconfigure the parameters of virtual switch 138 in response to changing conditions in platform 102 (e.g., the addition or deletion of virtual machines 132 or identification of optimizations that may be made to enhance performance of the platform).

Hypervisor 120 may include any suitable number of I/O device drivers 124. I/O device driver 124 represents one or more software components that allow the hypervisor 120 to communicate with a physical I/O device. In various embodiments, the underlying physical I/O device may be coupled to any of CPUs 112 and may send data to CPUs 112 and receive data from CPUs 112. The underlying I/O device may utilize any suitable communication protocol, such as PCI, PCIe, Universal Serial Bus (USB), Serial Attached SCSI (SAS), Serial ATA (SATA), InfiniBand, Fibre Channel, an IEEE 802.3 protocol, an IEEE 802.11 protocol, or other current or future signaling protocol.

The underlying I/O device may include one or more ports operable to communicate with cores of the CPUs 112. In one example, the underlying I/O device is a physical NIC or physical switch. For example, in one embodiment, the underlying I/O device of I/O device driver 124 is a NIC of communication interface 118 having multiple ports (e.g., Ethernet ports).

In other embodiments, underlying I/O devices may include any suitable device capable of transferring data to and receiving data from CPUs 112, such as an audio/video (A/V) device controller (e.g., a graphics accelerator or audio controller); a data storage device controller, such as a flash memory device, magnetic storage disk, or optical storage disk controller; a wireless transceiver; a network processor; or a controller for another input device such as a monitor, printer, mouse, keyboard, or scanner; or other suitable device.

In various embodiments, when a processing request is received, the I/O device driver 124 or the underlying I/O device may send an interrupt (such as a message signaled interrupt) to any of the cores of the platform logic 110. For example, the I/O device driver 124 may send an interrupt to a core that is selected to perform an operation (e.g., on behalf of a virtual machine 132 or a process of an application). Before the interrupt is delivered to the core, incoming data (e.g., network packets) destined for the core might be cached at the underlying I/O device and/or an I/O block associated with the CPU 112 of the core. In some embodiments, the I/O device driver 124 may configure the underlying I/O device with instructions regarding where to send interrupts.

In some embodiments, as workloads are distributed among the cores, the hypervisor 120 may steer a greater number of workloads to the higher performing cores than the lower performing cores. In certain instances, cores that are exhibiting problems such as overheating or heavy loads may be given less tasks than other cores or avoided altogether (at least temporarily). Workloads associated with applications, services, containers, and/or virtual machines 132 can be balanced across cores using network load and traffic patterns rather than just CPU and memory utilization metrics.

The elements of platform logic 110 may be coupled together in any suitable manner. For example, a bus may couple any of the components together. A bus may include any known interconnect, such as a multi-drop bus, a mesh interconnect, a ring interconnect, a point-to-point interconnect, a serial interconnect, a parallel bus, a coherent (e.g., cache coherent) bus, a layered protocol architecture, a differential bus, or a Gunning transceiver logic (GTL) bus.

Elements of the data system 100 may be coupled together in any suitable, manner such as through one or more networks 108. A network 108 may be any suitable network or combination of one or more networks operating using one or more suitable networking protocols. A network may represent a series of nodes, points, and interconnected communication paths for receiving and transmitting packets of information that propagate through a communication system. For example, a network may include one or more firewalls, routers, switches, security appliances, antivirus servers, or other useful network devices. A network offers communicative interfaces between sources and/or hosts, and may comprise any local area network (LAN), wireless local area network (WLAN), metropolitan area network (MAN), Intranet, Extranet, Internet, wide area network (WAN), virtual private network (VPN), cellular network, or any other appropriate architecture or system that facilitates communications in a network environment. A network can comprise any number of hardware or software elements coupled to (and in communication with) each other through a communications medium. In various embodiments, guest systems 122 may communicate with nodes that are external to the datacenter 100 through network 108.

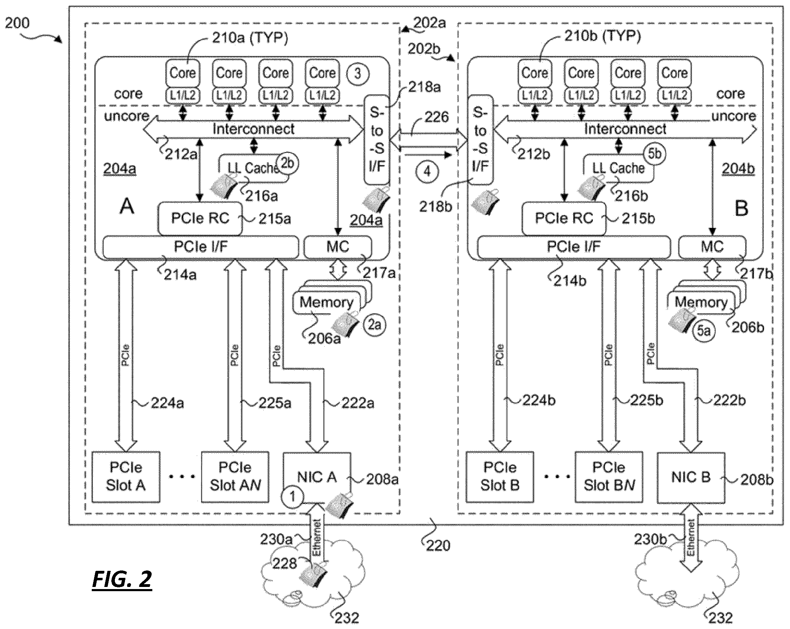

FIG. 2 illustrates an example of a conventional Non-Uniform Memory Access (NUMA) multi-processor platform architecture 200. In this example, two NUMA nodes 202a and 202b (also labeled 'A' and 'B' herein for simplicity and convenience), are implemented on a device. Nodes A and B may be provided with a respective microprocessor (e.g., 204a, 204b). In addition to a processor, each node may include respective memory elements 206a,b (e.g., to implement system memory), a respective network interface controller (NIC) 208a,b, and a plurality of slots 1-N in which respective devices (e.g., PCIe cards (not shown)) may be installed. Each processor 204 includes a core portion including a plurality of processor cores 210, each including a local level 1 (L1) and level 2 (L2) cache. The remaining portion of the processor is referred to as the uncore, and includes various interconnect circuitry and interfaces for connecting various functional blocks on the processor in communication. For simplicity this interconnect circuitry is depicted as an interconnect 212; however, it will be understood that interconnect 212 may be representative of one or more interconnect structures, such as buses and single or multi-lane serial point-to-point or mesh interconnect structures.

A portion of the uncore circuitry is configured to handle many of the North-bridge functions, such as a PCIe interface (I/F) 214, a PCIe Root Complex (RC) 215, a last level cache (LL Cache) 216, a memory controller (MC) 217, and a socket-to-socket link interface (S-to-S I/F) 218, among other example functional blocks.

Each of processors 204 is operatively coupled to a printed circuit board called main board 220 via a socket, or otherwise coupled to the main board via a direct coupling technique, such as flip-chip bonding. In either case, it is common practice to refer to the processors themselves as sockets, and thus the usage of the terminology socket-to-socket links and interfaces for coupling processor nodes in communication. Main board 220 includes electrical wiring (e.g., traces and vias) to facilitate electrical connections corresponding to the physical structure of various interconnects depicted in FIG. 2. These interconnects may include PCIe interconnects 222 between PCIe interfaces 214 and NICs 208, interconnects 224 and 225 between PCIe interfaces 214 and PCI slots 1-N, and a socket-to-socket link 226 coupled between socket-to-socket interfaces 218 a and 218 b. In one embodiment, socket-to-socket interfaces 218a and 218b may employ a Quick Path Interconnect (QPI) or Ultra Path Interconnect (UPI) protocol and wiring structure, among other example die-to-die (or package-to-package) interconnect technologies.

Under a NUMA architecture, processors (and processor cores) are enabled to access different memory resources distributed across the platform. The memory resources may be considered local memory resources (e.g., memory resources on the same node as a processor or core) or non-local memory resources (e.g., memory resources on other nodes). For example, under the viewpoint of node 202a, system memory 206a comprises a local memory resource, while system memory 206b includes a non-local memory resource. Under another type of NUMA architecture (not depicted herein), non-local memory resources may also be shared between processors while not being associated with a particular processor or node. Since, for a given node, local memory resources are operatively coupled to a processor, while non-local memory resources are not, the access to the local memory resources relative to the non-local memory resources is not the same (e.g., the access is non-uniform). Moreover, it is preferable to employ local memory resources when available.

Under platform architecture 200, software running on a processor core in one node may be allocated a memory address space in system memory nominally associated with another node. Accordingly, under some embodiments the address space for a portion of the memory resources for a platform may be managed as a single global pool, with unique addresses for each memory address location within the pool. Additionally, a portion of the address space may be considered local address space that employs local addressing (e.g., address space allocated to an operating system), while another portion may be addressed using global addressing.

In accordance with another aspect of NUMA architectures, network ports (and thus associated NICs) may be assigned to software application that are running on processors (or processor cores) that are on nodes that are different than the node associated with the assigned port. When the memory allocated to the software application is on the same node as the processor, the NIC receiving the packets and the destined memory resource in which the packet data is to be written are on separate nodes.

NICs and other I/O devices may be configured to provide an interface with a computer network using a corresponding network protocol, such as the Ethernet protocol depicted in FIG. 2. Under a typical implementation, each NIC is associated with an operating system (OS) NIC (device) driver that is logically located in an OS kernel. The NIC driver (or other I/O device driver) may be used as an abstracted interface between the operating system software and the NIC, which is a hardware device. For example, a NIC driver may provide access to registers on a NIC, provide a program interface to the NIC, etc. The NIC driver also facilitates handling and forwarding of data received via packets from the network to consumers of that data, such as a software application. For instance, under conventional usage packets are received at a NIC input port and buffered in an input buffer and then copied to a memory buffer in system memory that is allocated to the NIC driver by the operating system. Additionally processing of the packet data may also be performed by the NIC driver.

Under NUMA architectures, there may be instances where packets received via a computer network at a NIC on a first node need to be written to system memory or a memory cache associated with another node, as discussed above. Such a situation is illustrated in FIG. 2, which further shows how data corresponding to a packet 228 that is received by a NIC at a first node but contains data that is to be written to system memory or cache on a second node is handled under a conventional approach. In the example illustrated in FIG. 2, each of NICs A and B are connected via respective Ethernet links 230 to a network 232. For convenience, network 232 is shown as two separate clouds; however, it will be understood that these represent connections to the same network. Optionally, the depiction of separate clouds in the Figures herein may be interpreted as identifying connections to separate networks, regardless to whether they are depicted using the same reference number.

In one example, the handling of a packet 228 may include the receipt of the packet from a network 232 via Ethernet link 230a at an input port of NIC 208a, is buffered (e.g., temporarily stored) in an input buffer, and classified and/or otherwise a memory address to which the packet data is to be written is determined. During a second operation, a packet data of packet 228 is then copied from the input buffer and written to system memory 206a using a DMA (Direct Memory Access) write operation. This involves forwarding packet data corresponding to the packet from NIC 208a via PCIe link 222a and PCIe interface 214a to memory controller 216a via interconnect 212a using a PCIe memory write transaction. Memory controller 216a then writes the packet data to system memory 206a, as depicted at an operation 2a. Optionally, the packet data is written to LL Cache 214a, as depicted by an operation 2b. The use of a DMA write operation enables the memory write to be performed independent of an operating system.

As will be understood by one skilled in the networking arts, forwarding packet data from one storage location to another is commonly termed forwarding the packet, regardless of the number of copies of the packet data that are employed. Accordingly, forwarding a packet or forwarding packet data in the detailed description and the claims includes implied data copy operations, as applicable. In addition, forwarding a packet or forwarding packet data may include transferring a portion or portions of the data in the packet, the complete packet, and/or meta-data associated with the packet such as classification results, hash values, etc.

Depending on the implementation, during a third operation a software entity running on one of cores 210a (e.g., a NIC driver) will either detect or be apprised of the arrival of packet 228 in system memory 206a or LLC 216a and determine that the packet data is actually associated with (e.g., the consumer of the packet is) a consumer software application having a memory allocation including a portion of the memory address space of system memory 206b on node B. Or more simply, a determination will be made that the packet data is to be written to an address within an address range associated with system memory 206b. Accordingly, during a forth operation the data for packet 228 is copied from system memory 206a or LL Cache 216a to a first buffer on socket-to-socket interface 218a on node A and sent to socket-to-socket interface 218b on node B over interconnect link 226, where it is received in a second buffer. Depending on the implementation, the buffered copy of packet 228 is either then written to system memory 206b or LL Cache 216b during a fifth operation, as depicted by operations 5a and 5b. At this stage, the packet data may be accessed by the software application that is a consumer of the packet via its location in either system memory 214b or LLC 216b, among other example implementations and applications.

Traditionally, software and systems that are NUMA-optimized target optimization of processor-memory traffic, focusing on maintaining localization between a processing core and local memory within a given NUMA zone. Some applications may utilize transactions with other devices and utilize I/O traffic (e.g., between a NUMA zone processor and another device as facilitated by a network interface device (e.g., a network interface controller (NIC)) present on a NUMA platform, with the application consuming data from the I/O traffic. In an improved system, NUMA optimization principles may also be applied to CPU-I/O traffic for an application utilizing a NUMA platform, including in instances where multiple I/O devices (e.g., NICs) are provided on the platform and aggregated (e.g., via NIC bonding) to cause the multiple I/O devices to appear logically as a single I/O element. Bonding (or teaming), in this sense, may serve to increase the available bandwidth of the platform. When bonded, two (or more) NICs form a single channel and are caused to appear to be the same physical device (e.g., with the same MAC address).

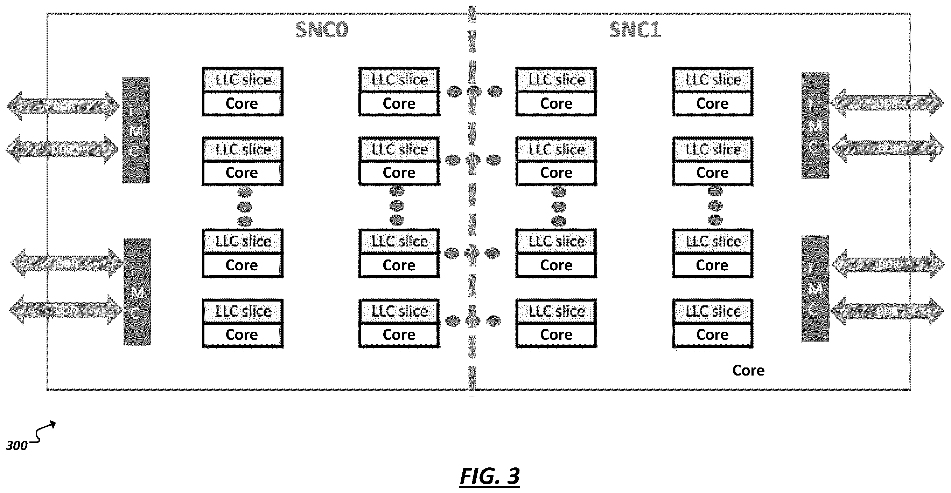

While some solutions may attempt to implement NUMA optimization to CPU-I/O device traffic by assigning a given I/O device to one of the NUMA nodes in the platform, such a solution fails when the platform is configured to virtualize or present multiple I/O devices on the platform as a single logic device (e.g., as with bonding or teaming), or where the platform has only a single I/O device (a NIC) that services multiple applications using sub-NUMA clustering. Sub-NUMA clustering (or NUMA-per-socket) may refer to microarchitectures that support the division of a single processor socket (e.g., which would traditionally serve as a single NUMA node) into two or more disjoint clusters, each cluster having its own set of cores and memory (e.g., LLCs). When sub-NUMA clustering is enabled, these clusters may form distinct NUMA domains, or zones, within the single physical processor socket. Within each NUMA zone, the cores, LLCs, and memory controllers are grouped based on their proximity to each other. This proximity allows for improved memory latency and bandwidth performance for local memory accesses. Such a cluster (or "sub-NUMA cluster" or "SNC") may implement the multiple localization domains within the processor by mapping addresses from one of the local memory controllers in one half of the LLC slices closer to that memory controller and addresses mapped to the other memory controller into the LLC slices in the other half. Through this address-mapping mechanism, processes running on cores on one of the SNC domains using memory from the memory controller in the same SNC domain observe lower LLC and memory latency compared to latency on accesses mapped to locations outside of the same SNC domain. For instance, FIG. 3 illustrates an example two-cluster configuration within a socket 305 supporting SNC. For instance, clusters 310, 315 may be defined to divide the processor socket 305 into two NUMA domains, each NUMA domain having its own set of cores, LLCs, memory controllers, and DDR channels. In this example, a first subset of the cores (e.g., 320a-h) coupled to a first subset of LLCs (e.g., 325a-h) are associated with a first cluster 310, together with the most closely located memory controllers (e.g., 330a-b), while a second subset of the cores (e.g., 335a-h) coupled to a second subset of LLCs (e.g., 340a-h) are associated with a second cluster 315 together with the remaining memory controllers 345a-b. Other sockets may enable greater than two SNC, to thereby enable the definition and use of a corresponding number of NUMA zones, which may be leveraged by an application executing using the socket, among other examples.

In an improved implementation, NUMA optimization may be applied to CPU-I/O traffic in addition to CPU-memory traffic. For instance, an I/O device may be assigned to one of the NUMA nodes or zones supported by the platform. For example, the I/O device may be assigned to one of the SNC-based zones configured for the socket or may be assigned to the NUMA node it is physically attached to on the platform, among other examples. Applications may be developed, which leverage such functionality on the platform, for instance, by affinitizing the application to a given one of the NUMA nodes to ensure that not only the memory used in the execution of the application is the memory attached to the NUMA node, but that the I/O device (and memory for I/O) used in association with the application's execution is also associated with the NUMA node (e.g., in that the I/O device is also collocated on the NUMA node or is the closest proximity I/O device (e.g., NIC) to the NUMA node, etc.).

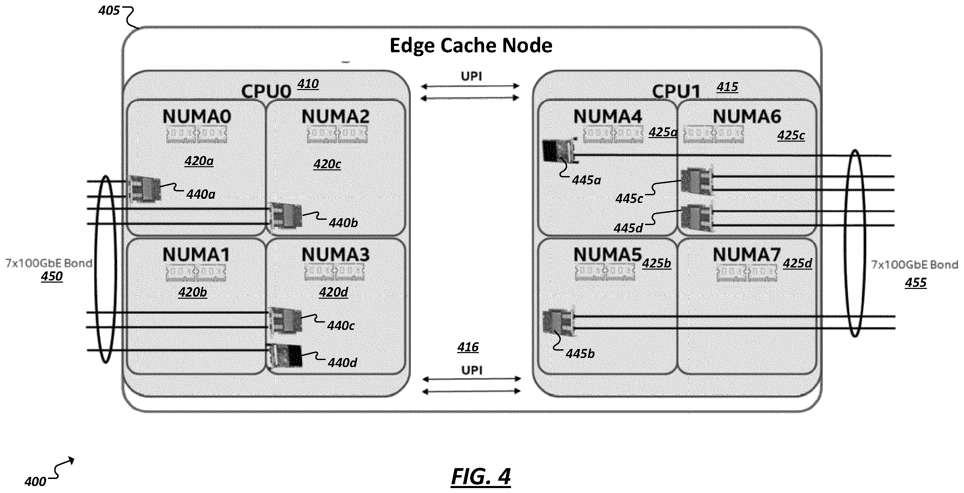

Turning to the simplified block diagram 400 of FIG. 4, an example NUMA system 405 is shown of a platform including two NUMA-enabled CPU sockets 410, 415. The CPU sockets may be interconnected by a die-to-die interconnect 416 (e.g., based on an Ultra Path Interconnect (UPI) or another protocol). In this example, each CPU socket 410, 415 may support and expose four sub-NUMA zones (e.g., 420a-d, 425a-d). A NUMA zone may include one or more processor cores and one or more local memory blocks (e.g., to implement LLC slices). A CPU socket 410, 415 may further include one or more I/O devices (e.g., 440a-d, 445a-d). In the example of FIG. 4, seven NICs may be provided at each socket 410, 415. The I/O devices may be attached to different NUMA zones 420a-d, 425a-d (e.g., based on a SNC4 configuration). In this example, a traditional approach is employed to attempt to realize optimal NUMA ingress and egress by utilizing NIC bonding, in this case, with two independent NIC bonds 450, 455 being employed (e.g., one for each socket 410, 415), each with seven NICs each (e.g., the NICs located at the corresponding socket). Each I/O device is assigned to a pre-defined one of the supported NUMA zones or node (e.g., 420a-d, 425a-d) or to the NUMA node to which it is physically attached on the platform 405. An application executed on the platform may also be affinitized to one of the NUMA nodes (e.g., 420a-d, 425a-d) to attempt to ensure that the memory for the application and the memory for the I/O performed by the I/O device will be from a common NUMA node. While aligning an application to a NUMA node may be straightforward for optimizing CPU-memory traffic on the node, ensuring that the application's network I/O traffic is NUMA optimal in the presence of bonding (e.g., 450, 455) or when multiple applications share the same I/O device but run on different NUMA nodes (using sub-NUMA clustering) is more challenging to implement. For instance, in traditional implementations, queues are shared on NICs, so partitioning based on an applications' NUMA zone affinity is not transferred to the queues and associated buffers, because doing so may adversely affect the NUMA zone affinity of another application (e.g., if it happens to be different). Further, even in NUMA platforms where only a single application is executed, when using bonded I/O devices, thread locality and ingress/egress (NIC) port mismatch may occur disrupting NUMA optimality, among other example issues.

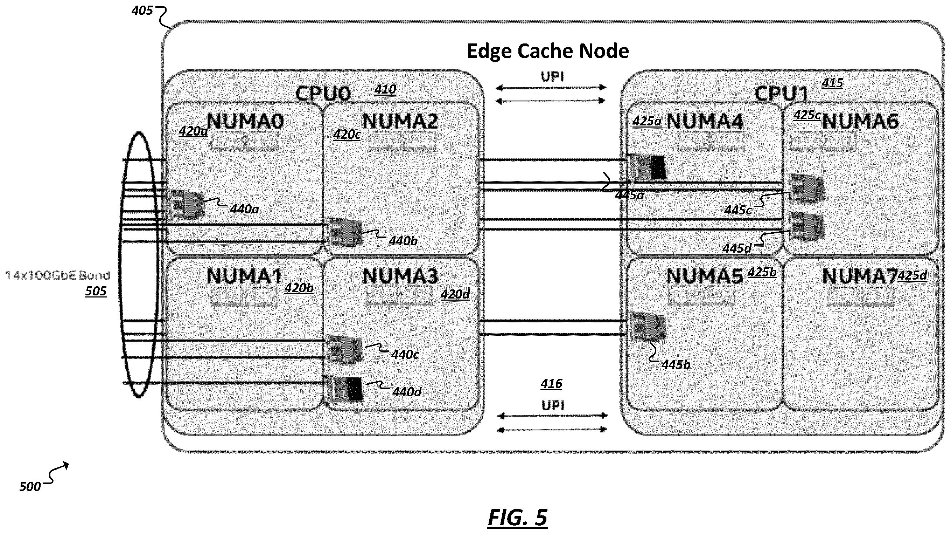

Turning to FIG. 5, a simplified block diagram 500 is shown with an improved I/O solution for I/O traffic affinitization on an example computing platform 405. For instance, in the example of FIG. 5, a single bond 505 may be configured for the collective I/O devices (e.g., 440a-d, 445a-d (e.g., fourteen NICs)) on the platform implemented on sockets 410, 415) (e.g., rather than multiple bonds). The platform may be configured to enforce policies that groups of threads of an application are to be executed by and use memory of a single one of the NUMA zones (e.g., within a given NUMA node or sub-NUMA cluster), as well as use an I/O device within or in closest proximity to the particular NUMA cluster for any packets received and/or sent in connection with execution of a corresponding group of threads of the application. In this sense, the group of threads may be assigned to a particular NUMA zone and NUMA optimization may be applied not only to CPU-memory traffic, but also CPU-I/O device traffic. While FIG. 5 shows a particular implementation where multiple NUMA zones are implemented across multiple CPU sockets, with a single NIC bond applied to a number of NICs, it should be appreciated that this solution may also be applied to other platforms where multiple NUMA zones are supported and one or multiple I/O devices are available to handle data of the NUMA zones, among other example applications and implementations.

In some implementations, an orchestrator may be implemented (e.g., in a kernel, operating, system, etc.) of a computing platform to configure the layers of an I/O stack to dictate NUMA-based I/O optimization within the platform. For instance, the orchestrator may configure the application and/or kernel, a driver (e.g., a bonding driver) controlling I/O devices (e.g., NICs) on the platform and managing any bonds associated with the I/O devices, and/or the I/O device hardware itself to attempt to ensure that packets to be consumed by threads of an application executed on the platform are received by an I/O device associated with an assigned NUMA zone, the threads' execution is to be performed using the processing cores and memory of the same NUMA zone, and any data transmitted in association with the execution of the threads is to be carried out using the same I/O device. Accordingly, in a multi-NUMA domain system with bonded NICs or one NIC, configurable alignment may be achieved, where the application traffic is NUMA optimal for both the I/O device (e.g., a NIC) and the core. That is, data that is transmitted or received is from buffers (and corresponding I/O device queues) associated with the optimal NUMA core on the platform. Such a system may enable better and more stable performance, for instance, as measured in improved throughput (e.g., transactions per second) and lower variability in performance (e.g., jitter). Additionally, in cases where a single bond is implemented, enhanced performance may be achieved with a single IP address (associated with the bond). In some implementations, data centers employing such systems may enjoy enhanced value in software monetization and hosting, among other example advantages.

In one example implementation, an application to be executed on a platform may identify threads of the application and group the identified threads in one or more thread pools such that each thread pool is to be associated with, or affinitized to, a respective NUMA zone of the platform. In some instances, the application may utilize an API or other utility provided on the platform to determine the capabilities of the platform, such as the number of NUMA zones that may be supported, identify how the thread pools are assigned to specific NUMA zones, among other information. In some implementations, the application may be configured to support traditional CPU-memory NUMA optimization (e.g., through the assignment of threads to various NUMA zones) and leverage this functionality to further optimize the application through I/O-based NUMA optimization. In other cases, the application may not be NUMA aware and a utility (e.g., a plug-in, orchestrator engine, etc.) of the platform may effectively manage the manner in which the application is executed on the platform by identifying thread pools of the application and facilitating NUMA zone affinization on behalf of the application to enhance execution of the application, among other example implementations.

In some implementations, I/O devices on a platform may be equipped with additional logic (e.g., implemented in hardware, firmware, and/or software) to dedicate queues or queue groups implemented in the memory of the I/O device to particular application loads. Such functionality may be configured to assign particular NUMA zones to particular queue groups of the I/O device. For instance, the logic may implement application-specific queueing and steering at the I/O device (e.g., a NIC) through the dedication and isolation of application-specific hardware NIC queues. As an example, an I/O device may utilize Intel^{™} Application Device Queues (ADQ) or another technology to isolate the physical queues of the NIC to be assigned to particular NUMA zones of the platform. Application-dedicated queues (e.g., through ADQ) can operate transparently to the application. For instance, application independent poolers may be used to implement advanced steering modes, among other example implementations. The mapping of dedicated queues to NUMA zones serves to express the preferred NUMA zone for I/O traffic of a thread pool associated with the same NUMA zone. The association of thread pools with a NUMA zone and thereby a queue group in one of the NICs of the platform serves to cause all buffer allocations to happen from the preferred NUMA zone of the thread pool. Further, independent pollers and interrupts may be associated with the queue groups to run on cores of the same preferred NUMA zone.

Based on the capabilities of the platform and the application's configuration, an orchestrator may configure the platform (e.g., the driver, the kernel, the I/O devices, etc.) accordingly to enable NUMA optimized application traffic for both the NIC and the core. For instance, when a single application is defined to utilize, or span, multiple NUMA zones within the platform, but only a single I/O device is available for use across the multiple NUMA zones, the application may create a thread pool associated with each of the NUMA zones and the kernel or a driver may communicate with the I/O device to cause an application-dedicated queue group to be instantiated on the I/O device for each of the multiple NUMA zones to be used by the application. In other cases, a single application may span multiple NUMA zones and the NICs associated with the multiple NUMA zones may constitute multiple physical NICs (e.g., one NIC per NUMA zone or a mismatched number of NICs to NUMA zones (e.g., where two NUMA zones may share a NIC, while other NUMA zones have a dedicated NIC), etc.). Again, the application may create thread pools associated with the multiple NUMA zones and respective application-dedicated queue groups may be instantiated in the NICs associated with each of the NUMA zones. The queue groups may be used to attempt to enforce the receiving and sending of all I/O traffic for threads in a thread pool mapped to the corresponding NUMA zone to use the same I/O device.

In one example, with NUMA-optimized I/O traffic configured on the platform, packet flow within the platform (for a given application or thread pool of the application) may begin when a switch (external to the platform and used to route traffic (e.g., PCIe, CXL, or other I/O data) to the platform) identifies a packet that is destined for the platform or a particular socket within the platform. The NUMA affinities defined for the platform and a corresponding application may be unknown to the switch. Accordingly, the switch may select a particular port (e.g., from a bonded list, where NIC bonding or teaming is employed for the platform) to which one of the platform's I/O devices is attached. Depending on the port (and I/O device) that are selected, the associated NUMA zone resources may be assigned to also perform the work on the data received at that I/O device. For instance, an interrupt or poller on the NUMA zone may pick a received packet, perform network processing, and select a worker thread from the thread pool associated with the packet to perform the associated work (e.g., handle a request) through execution of the thread using the core(s) and memory of the same NUMA zone. When a response is ready, the thread executes within this NUMA zone to generate a response and initiate a send on an I/O device (e.g., to return the response to the remote requester). A driver associated with I/O devices of the platform may be utilized to process the send, such as a binding driver in cases where a NIC bond is implemented. The driver may be configured to recognize the NUMA zone association and enforce the selection of the same I/O device (which received the request packet) as the interface for use in sending the generated response. In some cases, symmetric queuing may be configured, with the queue used to submit the request for send (on the device) being paired with the queue used for receives. In other words, with a Tx/Rx queue-pair the Tx queue chosen is based on the corresponding Rx queue (of the queue pair) based on which packets for that connection were ingressed into the host.

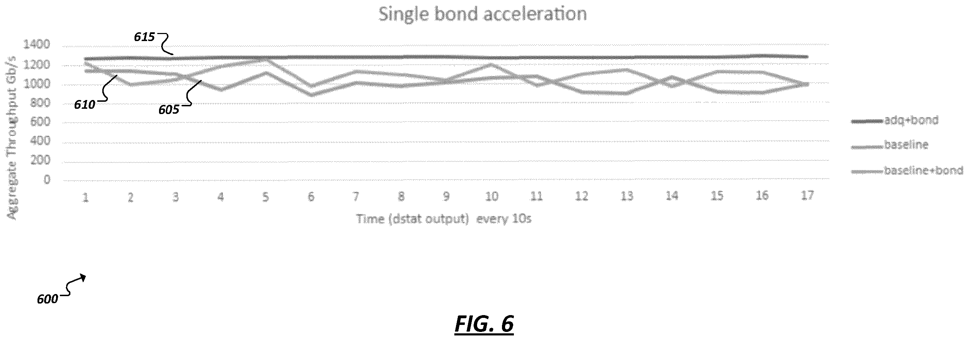

FIG. 6 illustrates a graph 600 showing the comparative performance of a system in processing transactions using traditional NUMA optimization (e.g., represented by curves 605, 610) with a system implementing a solution which localizes both CPU-memory and CPU-I/O traffic within a common NUMA node (represented by curve 615). As shown, the improved solution realizes relatively higher throughput, with less jitter, among other example advantages.

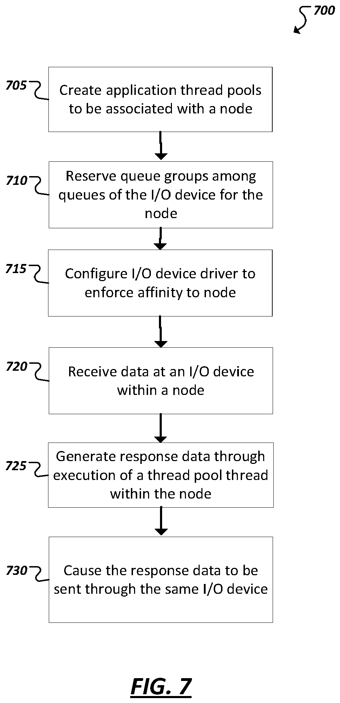

FIG. 7 is a simplified flow diagram 700 illustrating an example technique for implementing NUMA-like affinization of I/O traffic within a platform. For instance, an application may designate or create 705 thread pools, which include one or more threads of the application that are to be executed on a platform. The platform may be configured to realize NUMA optimization of workloads, such that threads of an application are executed on zones, or nodes, which include both the processing core and memory used during execution of the thread. Further, an orchestrator for the platform can further configure I/O device drivers and I/O devices within the platform to enforce affinitization of I/O traffic within the node where CPU and memory affinity is provided for a particular thread of the application. Queue groups may be reserved 715 within the I/O devices to associate a subset of the I/O device queues for use by threads executed within the zone. A driver may also be configured 715 to identify the affinitization of the queue groups, map buffers to the queue groups, and assist in enforcing I/O affinitization preferences for a corresponding thread pool. Data may be received 720 at a particular I/O device associated with a particular NUMA node and processing of the data may be localized by executing corresponding threads with processing cores and memory of the particular NUMA node to process the data. When data is generated 725 in response by the threads, the platform may enforce affinitization by causing 730 response data to be sent on the same I/O device on which it was received (e.g., provided the I/O device is available), among other example features.

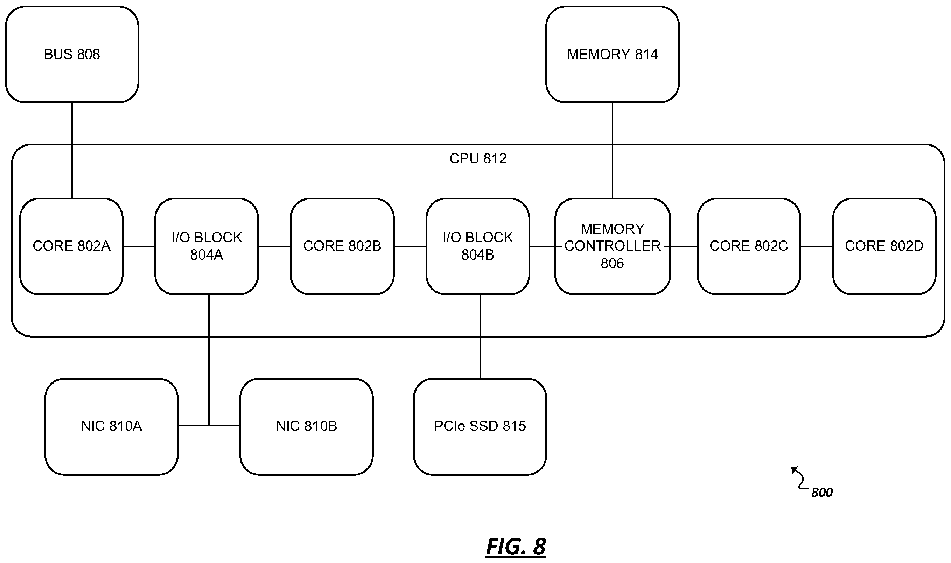

Note that the apparatus', methods', and systems described above may be implemented in any electronic device or system as aforementioned. As a specific illustration, FIG. 8 provides an exemplary implementation of a processing device such as one that may be included in a network processing device. It should be appreciated that other processor architectures may be provided to implement the functionality and processing of requests by an example network processing device, including the implementation of the example network processing device components and functionality discussed above. Further, while the examples discussed above focus on improvements to an Ethernet subsystem and links compliant with an Ethernet-based protocol, it should be appreciated that the principles discussed herein are protocol agnostic and may be applied to interconnects based on a variety of other technologies, such as PCIe, CXL, UCIe, CCIX, Infinity Fabric, among other examples.

Referring to FIG. 8, a block diagram 800 is shown of an example data processor device (e.g., a central processing unit (CPU)) 812 coupled to various other components of a platform in accordance with certain embodiments. Although CPU 812 depicts a particular configuration, the cores and other components of CPU 812 may be arranged in any suitable manner. CPU 812 may comprise any processor or processing device, such as a microprocessor, an embedded processor, a digital signal processor (DSP), a network processor, an application processor, a co-processor, a system on a chip (SOC), or other device to execute code. CPU 812, in the depicted embodiment, includes four processing elements (cores 802 in the depicted embodiment), which may include asymmetric processing elements or symmetric processing elements. However, CPU 812 may include any number of processing elements that may be symmetric or asymmetric.

In one embodiment, a processing element refers to hardware or logic to support a software thread. Examples of hardware processing elements include: a thread unit, a thread slot, a thread, a process unit, a context, a context unit, a logical processor, a hardware thread, a core, and/or any other element, which is capable of holding a state for a processor, such as an execution state or architectural state. In other words, a processing element, in one embodiment, refers to any hardware capable of being independently associated with code, such as a software thread, operating system, application, or other code. A physical processor (or processor socket) typically refers to an integrated circuit, which potentially includes any number of other processing elements, such as cores or hardware threads.

A core may refer to logic located on an integrated circuit capable of maintaining an independent architectural state, wherein each independently maintained architectural state is associated with at least some dedicated execution resources. A hardware thread may refer to any logic located on an integrated circuit capable of maintaining an independent architectural state, wherein the independently maintained architectural states share access to execution resources. As can be seen, when certain resources are shared and others are dedicated to an architectural state, the line between the nomenclature of a hardware thread and core overlaps. Yet often, a core and a hardware thread are viewed by an operating system as individual logical processors, where the operating system is able to individually schedule operations on each logical processor.

Physical CPU 812, as illustrated in FIG. 8, includes four cores-cores 802A, 802B, 802C, and 802D, though a CPU may include any suitable number of cores. Here, cores 802 may be considered symmetric cores. In another embodiment, cores may include one or more out-of-order processor cores or one or more in-order processor cores. However, cores 802 may be individually selected from any type of core, such as a native core, a software managed core, a core adapted to execute a native Instruction Set Architecture (ISA), a core adapted to execute a translated ISA, a co-designed core, or other known core. In a heterogeneous core environment (e.g., asymmetric cores), some form of translation, such as binary translation, may be utilized to schedule or execute code on one or both cores.

A core 802 may include a decode module coupled to a fetch unit to decode fetched elements. Fetch logic, in one embodiment, includes individual sequencers associated with thread slots of cores 802. Usually a core 802 is associated with a first ISA, which defines/specifies instructions executable on core 802. Often machine code instructions that are part of the first ISA include a portion of the instruction (referred to as an opcode), which references/specifies an instruction or operation to be performed. The decode logic may include circuitry that recognizes these instructions from their opcodes and passes the decoded instructions on in the pipeline for processing as defined by the first ISA. For example, as decoders may, in one embodiment, include logic designed or adapted to recognize specific instructions, such as transactional instructions. As a result of the recognition by the decoders, the architecture of core 802 takes specific, predefined actions to perform tasks associated with the appropriate instruction. It is important to note that any of the tasks, blocks, operations, and methods described herein may be performed in response to a single or multiple instructions; some of which may be new or old instructions. Decoders of cores 802, in one embodiment, recognize the same ISA (or a subset thereof). Alternatively, in a heterogeneous core environment, a decoder of one or more cores (e.g., core 802B) may recognize a second ISA (either a subset of the first ISA or a distinct ISA).

In various embodiments, cores 802 may also include one or more arithmetic logic units (ALUs), floating point units (FPUs), caches, instruction pipelines, interrupt handling hardware, registers, or other suitable hardware to facilitate the operations of the cores 802.

Bus 808 may represent any suitable interconnect coupled to CPU 812. In one example, bus 808 may couple CPU 812 to another CPU of platform logic (e.g., via UPI). I/O blocks 804 represents interfacing logic to couple I/O devices 810 and 815 to cores of CPU 812. In various embodiments, an I/O block 804 may include an I/O controller that is integrated onto the same package as cores 802 or may simply include interfacing logic to couple to an I/O controller that is located off-chip. As one example, I/O blocks 804 may include PCIe interfacing logic. Similarly, memory controller 806 represents interfacing logic to couple memory 814 to cores of CPU 812. In various embodiments, memory controller 806 is integrated onto the same package as cores 802. In alternative embodiments, a memory controller could be located off chip.

As various examples, in the embodiment depicted, core 802A may have a relatively high bandwidth and lower latency to devices coupled to bus 808 (e.g., other CPUs 812) and to NICs 810, but a relatively low bandwidth and higher latency to memory 814 or core 802D. Core 802B may have relatively high bandwidths and low latency to both NICs 810 and PCIe solid state drive (SSD) 815 and moderate bandwidths and latencies to devices coupled to bus 808 and core 802D. Core 802C would have relatively high bandwidths and low latencies to memory 814 and core 802D. Finally, core 802D would have a relatively high bandwidth and low latency to core 802C, but relatively low bandwidths and high latencies to NICs 810, core 802A, and devices coupled to bus 808.

"Logic" (e.g., as found in I/O controllers, power managers, latency managers, etc. and other references to logic in this application) may refer to hardware, firmware, software and/or combinations of each to perform one or more functions. In various embodiments, logic may include a microprocessor or other processing element operable to execute software instructions, discrete logic such as an application specific integrated circuit (ASIC), a programmed logic device such as a field programmable gate array (FPGA), a memory device containing instructions, combinations of logic devices (e.g., as would be found on a printed circuit board), or other suitable hardware and/or software. Logic may include one or more gates or other circuit components. In some embodiments, logic may also be fully embodied as software.

A design may go through various stages, from creation to simulation to fabrication. Data representing a design may represent the design in a number of manners. First, as is useful in simulations, the hardware may be represented using a hardware description language (HDL) or another functional description language. Additionally, a circuit level model with logic and/or transistor gates may be produced at some stages of the design process. Furthermore, most designs, at some stage, reach a level of data representing the physical placement of various devices in the hardware model. In the case where conventional semiconductor fabrication techniques are used, the data representing the hardware model may be the data specifying the presence or absence of various features on different mask layers for masks used to produce the integrated circuit. In some implementations, such data may be stored in a database file format such as Graphic Data System II (GDS II), Open Artwork System Interchange Standard (OASIS), or similar format.

In some implementations, software-based hardware models, and HDL and other functional description language objects can include register transfer language (RTL) files, among other examples. Such objects can be machine-parsable such that a design tool can accept the HDL object (or model), parse the HDL object for attributes of the described hardware, and determine a physical circuit and/or on-chip layout from the object. The output of the design tool can be used to manufacture the physical device. For instance, a design tool can determine configurations of various hardware and/or firmware elements from the HDL object, such as bus widths, registers (including sizes and types), memory blocks, physical link paths, fabric topologies, among other attributes that would be implemented in order to realize the system modeled in the HDL object. Design tools can include tools for determining the topology and fabric configurations of system on chip (SoC) and other hardware device. In some instances, the HDL object can be used as the basis for developing models and design files that can be used by manufacturing equipment to manufacture the described hardware. Indeed, an HDL object itself can be provided as an input to manufacturing system software to cause the described hardware.

In any representation of the design, the data may be stored in any form of a machine readable medium. A memory or a magnetic or optical storage such as a disc may be the machine-readable medium to store information transmitted via optical or electrical wave modulated or otherwise generated to transmit such information. When an electrical carrier wave indicating or carrying the code or design is transmitted, to the extent that copying, buffering, or re-transmission of the electrical signal is performed, a new copy is made. Thus, a communication provider or a network provider may store on a tangible, machine-readable medium, at least temporarily, an article, such as information encoded into a carrier wave, embodying techniques of embodiments of the present disclosure.

A module as used herein refers to any combination of hardware, software, and/or firmware. As an example, a module includes hardware, such as a micro-controller, associated with a non-transitory medium to store code adapted to be executed by the micro-controller. Therefore, reference to a module, in one embodiment, refers to the hardware, which is specifically configured to recognize and/or execute the code to be held on a non-transitory medium. Furthermore, in another embodiment, use of a module refers to the non-transitory medium including the code, which is specifically adapted to be executed by the microcontroller to perform predetermined operations. And as can be inferred, in yet another embodiment, the term module (in this example) may refer to the combination of the microcontroller and the non-transitory medium. Often module boundaries that are illustrated as separate commonly vary and potentially overlap. For example, a first and a second module may share hardware, software, firmware, or a combination thereof, while potentially retaining some independent hardware, software, or firmware. In one embodiment, use of the term logic includes hardware, such as transistors, registers, or other hardware, such as programmable logic devices.

Use of the phrase `to' or `configured to,' in one embodiment, refers to arranging, putting together, manufacturing, offering to sell, importing and/or designing an apparatus, hardware, logic, or element to perform a designated or determined task. In this example, an apparatus or element thereof that is not operating is still `configured to' perform a designated task if it is designed, coupled, and/or interconnected to perform said designated task. As a purely illustrative example, a logic gate may provide a 0 or a 1 during operation. But a logic gate `configured to' provide an enable signal to a clock does not include every potential logic gate that may provide a 1 or 0. Instead, the logic gate is one coupled in some manner that during operation the 1 or 0 output is to enable the clock. Note once again that use of the term `configured to' does not require operation, but instead focus on the latent state of an apparatus, hardware, and/or element, where in the latent state the apparatus, hardware, and/or element is designed to perform a particular task when the apparatus, hardware, and/or element is operating.

Furthermore, use of the phrases `capable of/to,' and or 'operable to,' in one embodiment, refers to some apparatus, logic, hardware, and/or element designed in such a way to enable use of the apparatus, logic, hardware, and/or element in a specified manner. Note as above that use of to, capable to, or operable to, in one embodiment, refers to the latent state of an apparatus, logic, hardware, and/or element, where the apparatus, logic, hardware, and/or element is not operating but is designed in such a manner to enable use of an apparatus in a specified manner.

A value, as used herein, includes any known representation of a number, a state, a logical state, or a binary logical state. Often, the use of logic levels, logic values, or logical values is also referred to as 1's and 0's, which simply represents binary logic states. For example, a 1 refers to a high logic level and 0 refers to a low logic level. In one embodiment, a storage cell, such as a transistor or flash cell, may be capable of holding a single logical value or multiple logical values. However, other representations of values in computer systems have been used. For example, the decimal number ten may also be represented as a binary value of 418A0 and a hexadecimal letter A. Therefore, a value includes any representation of information capable of being held in a computer system.

Moreover, states may be represented by values or portions of values. As an example, a first value, such as a logical one, may represent a default or initial state, while a second value, such as a logical zero, may represent a non-default state. In addition, the terms reset and set, in one embodiment, refer to a default and an updated value or state, respectively. For example, a default value potentially includes a high logical value, i.e. reset, while an updated value potentially includes a low logical value, i.e. set. Note that any combination of values may be utilized to represent any number of states.

The embodiments of methods, hardware, software, firmware or code set forth above may be implemented via instructions or code stored on a machine-accessible, machine readable, computer accessible, or computer readable medium which are executable by a processing element. A non-transitory machine-accessible/readable medium includes any mechanism that provides (i.e., stores and/or transmits) information in a form readable by a machine, such as a computer or electronic system. For example, a non-transitory machine-accessible medium includes random-access memory (RAM), such as static RAM (SRAM) or dynamic RAM (DRAM); ROM; magnetic or optical storage medium; flash memory devices; electrical storage devices; optical storage devices; acoustical storage devices; other form of storage devices for holding information received from transitory (propagated) signals (e.g., carrier waves, infrared signals, digital signals); etc., which are to be distinguished from the non-transitory mediums that may receive information there from.

Instructions used to program logic to perform embodiments of the disclosure may be stored within a memory in the system, such as DRAM, cache, flash memory, or other storage. Furthermore, the instructions can be distributed via a network or by way of other computer readable media. Thus a machine-readable medium may include any mechanism for storing or transmitting information in a form readable by a machine (e.g., a computer), but is not limited to, floppy diskettes, optical disks, Compact Disc, Read-Only Memory (CD-ROMs), and magneto-optical disks, Read-Only Memory (ROMs), Random Access Memory (RAM), Erasable Programmable Read-Only Memory (EPROM), Electrically Erasable Programmable Read-Only Memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the computer-readable medium includes any type of tangible machine-readable medium suitable for storing or transmitting electronic instructions or information in a form readable by a machine (e.g., a computer).

The following examples pertain to embodiments in accordance with this Specification. Example 1 is an apparatus including: logic to implement localization of I/O traffic for a portion of an application in a node used to execute the portion of the application.

Example 2 is an apparatus including: logic to: identify a set of threads of an application to be executed on a platform, where the platform includes a multi-node architecture; reserve a set of queues of an I/O device of the platform, where the set of queues are to be associated with one of a plurality of nodes in the multi-node architecture; receive data at the I/O device, where the I/O device is included in a particular one of the plurality of nodes; identify response data generated through execution of a thread in the set of threads, where the thread is executed using a processing core and memory of the particular node; and cause the response data to be sent on the I/O device based on inclusion of the I/O device in the particular node.

Example 3 includes the subject matter of example 2, where the I/O device includes a network interface controller (NIC).

Example 4 includes the subject matter of any one of examples 2-3, where the logic is further to associate the set of threads with the set of queues of the I/O device.

Example 5 includes the subject matter of any one of examples 2-4, where the multi-node architecture includes a non-uniform memory access (NUMA) architecture.

Example 6 includes the subject matter of any one of examples 2-5, where the platform includes a plurality of I/O devices respectively associated with nodes in the plurality of nodes.

Example 7 includes the subject matter of example 6, where channels of the plurality of I/O devices are bonded to present the plurality of I/O devices a single logical device.

Example 8 includes the subject matter of any one of examples 2-7, where traffic between the processing core and memory is NUMA-optimized.

Example 9 includes the subject matter of any one of examples 2-8, where the platform includes a plurality of processor sockets to implement the plurality of nodes.

Example 10 includes the subject matter of any one of examples 2-9, where the plurality of nodes include sub-socket-level clusters, where multiple nodes are implemented per socket in the platform.

Example 11 includes the subject matter of any one of example 2-10, where the logic is implemented at least in part in hardware circuitry.

Example 12 is a method including: identifying a set of threads of an application to be executed on a platform, where the platform includes a multi-node architecture; reserving a set of queues of an I/O device of the platform, where the set of queues are to be associated with one of a plurality of nodes in the multi-node architecture; receiving data at the I/O device, where the I/O device is included in a particular one of the plurality of nodes; identifying response data generated through execution of a thread in the set of threads, where the thread is executed using a processing core and memory of the particular node; and causing the response data to be sent on the I/O device based on inclusion of the I/O device in the particular node.

Example13 is a system including means to perform the method of example 12.

Example 14 includes the subject matter of example 13, where the means include an I/O device driver to perform at least a portion of the method of example 13.

Example 15 includes the subject matter of any one of examples 13-14, where the means include circuitry of the I/O device to perform at least a portion of the method of example 13.

Example 16 is a system including: a platform including: a plurality of processing cores; a plurality of memory blocks; a plurality of I/O devices; a driver for one or more of the plurality of I/O devices; logic to implement a plurality of nodes on the platform, where a node in the plurality of nodes includes a subset of the plurality of processing cores, a subset of the plurality of memory blocks, and a subset of the plurality of I/O devices; and an orchestrator to configure the subset of the plurality of I/O devices and the driver to support localization of I/O traffic for a thread executed at the node at one of the subset of I/O devices.

Example 17 includes the subject matter of example 16, where the subset of processing cores, the subset of memory blocks, and the subset of I/O devices are included in the node based on physical proximity to each other on the platform.

Example 18 includes the subject matter any one of examples 16-17, where the plurality of nodes are implemented based on a NUMA architecture.

Example 19 includes the subject matter of any one of examples 16-18, where localization of I/O traffic causes a particular one of the subset of I/O devices used to receive a packet for the thread to also be used to send responses associated with the packet generated through execution of the thread using the subset of processing cores and subset of memory blocks.

Example 20 includes the subject matter of any one of examples 16-19, where the plurality of I/O devices are bonded in a single bond.

Example 21 includes the subject matter of any one of examples 16-19, wherein the system includes the apparatus of any one of examples 2-10.

Reference throughout this specification to "one embodiment" or "an embodiment" means that a particular feature, structure, or characteristic described in connection with the embodiment is included in at least one embodiment of the present disclosure. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

In the foregoing specification, a detailed description has been given with reference to specific exemplary embodiments. It will, however, be evident that various modifications and changes may be made thereto without departing from the broader spirit and scope of the disclosure as set forth in the appended claims. The specification and drawings are, accordingly, to be regarded in an illustrative sense rather than a restrictive sense. Furthermore, the foregoing use of embodiment and other exemplarily language does not necessarily refer to the same embodiment or the same example, but may refer to different and distinct embodiments, as well as potentially the same embodiment.

## Claims

1. A method comprising:
identifying a set of threads of an application to be executed on a platform, wherein the platform comprises a multi-node architecture;
reserving a set of queues of an I/O device of the platform, wherein the set of queues are to be associated with one of a plurality of nodes in the multi-node architecture;
receiving data at the I/O device, wherein the I/O device is included in a particular one of the plurality of nodes;
identifying response data generated through execution of a thread in the set of threads, wherein the thread is executed using a processing core and memory of the particular node; and
causing the response data to be sent on the I/O device based on inclusion of the I/O device in the particular node.

2. The method of Claim 1, wherein the method is performed at least in part by an I/O device driver associated with the I/O device.

3. The method of Claim 1, wherein the method is performed at least in part by hardware circuitry of the I/O device.

4. The method of any one of Claims 1-3, wherein the I/O device comprises a network interface controller (NIC).

5. The method of any one of Claims 1-4, further comprising associating the set of threads with the set of queues of the I/O device.

6. The method of any one of Claims 1-5, wherein the multi-node architecture comprises a non-uniform memory access (NUMA) architecture.

7. The method of any one of Claims 1-6, wherein the platform comprises a plurality of I/O devices respectively associated with nodes in the plurality of nodes.

8. The method of Claim 7, wherein channels of the plurality of I/O devices are bonded to present the plurality of I/O devices a single logical device.

9. The method of any one of Claims 1-8, wherein traffic between the processing core and the memory is NUMA-optimized.

10. The method of any one of Claims 1-9, wherein the plurality of I/O devices are bonded in a single bond.

11. The method of any one of Claims 1-10, wherein a plurality of processor sockets to implement the plurality of nodes.

12. The method of any one of Claims 1-11, wherein the plurality of nodes comprise sub-socket-level clusters, wherein multiple nodes are implemented per socket in the platform.

13. A system comprising means to perform the method of any one of Claims 1-12.
